# EUROPEAN PATENT APPLICATION

(11) **EP 2 789 581 A1**
(43) Date of publication of application: **15.10.2014**
(21) Application number: 12856513.2
(22) Date of filing: 26.11.2012
(51) Int. Cl.: C01B 3/10, H01M 8/00, H01M 8/06, H01M 8/12

(54) **FUEL GENERATOR AND SECONDARY BATTERY-TYPE FUEL CELL SYSTEM EQUIPPED WITH SAME**

(30) Priority: 06.12.2011 JP 2011266751
(71) Applicant: Konica Minolta, Inc., Tokyo 100-7015 (JP)
(72) Inventor: YAMADA Jun, Tokyo 100-7015 (JP)
(74) Representative: HOFFMANN EITLE
(86) International application number: PCT/JP2012/080421
(87) International publication number: WO 2013/084733

(57) **Abstract**

This fuel generator is equipped with fine particles of a fuel-generating agent (1) that generates fuel by an oxidation reaction with an oxidizing gas and can be regenerated by a reduction reaction with a reducing gas, and a porous member (3). The fine particles of the fuel-generating agent (1) are dispersed and disposed in the interior of the porous member(3).

## Description

### Technical Field

The present invention relates to a fuel generator for generating fuel to be supplied to a fuel cell section, and relates to a secondary cell-type fuel cell system that is provided with such a fuel generator and that is capable of not only generating electric power but also storing it.

### Background Art

In fuel cells, typically, a solid polymer electrolyte film using a solid polymer ion exchange film, a solid oxide electrolyte film using yttria-stabilized zirconia (YSZ), or the like is held, from opposite sides, between a fuel electrode (anode) and an oxidizer electrode (cathode) to constitute each cell. There are further provided a fuel gas passage across which fuel gas (for example, hydrogen gas) is supplied to the fuel electrode and a oxidizing gas passage across which oxidizing gas (for example, oxygen or air) is supplied to the oxidizer electrode so that, as the fuel gas and the oxidizing gas are supplied across those passages to the fuel electrode and the oxidizer electrode respectively, electric power is generated.

Fuel cells extract electric power while producing water from hydrogen and oxygen. Owing to this principle, fuel cells allow highly efficient extraction of electric power, and are thus energy-saving; also, they discharge water alone as wastes, and are thus ecologically friendly. Thus, fuel cells are expected to provide the ultimate solution to energy and environmental problems on the global scale.

### List of Citations

### Patent Literature

Patent Document 1: WO No. 2011/030625

### Summary of the Invention

### Technical Problem

Patent Document 1 discloses a secondary cell-type fuel cell system comprising: a hydrogen generating member that generates hydrogen through an oxidation reaction with water vapor and that can be regenerated through a reduction reaction with hydrogen; and a power generation/electrolysis section having a power generating function of generating electric power by using, as fuel, hydrogen supplied from the hydrogen generating member and an electrolyzing function of electrolyzing water vapor for generating hydrogen supplied to the hydrogen generating member, wherein a mixture gas containing hydrogen and water vapor is circulated between the hydrogen generating member and the power generation/electrolysis section. It is also disclosed that a preferred material for the hydrogen generating member is iron.

A hydrogen generating member containing iron as a main component can, for example through an oxidation reaction expressed by formula (1) below, consume water vapor as an oxidizing gas to produce hydrogen as fuel (a reducing gas).

4H₂O + 3Fe → 4H₂ + Fe₃O₄ (1)

As the oxidation reaction of iron expressed by formula (1) above progresses, more iron becomes iron oxide, and the amount of remaining iron decreases. Through a reaction reverse to that expressed by formula (1) above, that is, through a reduction reaction expressed by formula (2) below, the hydrogen generating member can be regenerated.

4H₂ + Fe₃O₄ → 3Fe + 4H₂O (2)

Inconveniently, however, through repetition of the oxidation reaction expressed by formula (1) above and the reduction reaction expressed by formula (2) above, the iron flocculates to have a smaller surface diameter, thus causing so-called sintering. This deteriorates the performance of the hydrogen generating member (reduces the activity of iron), leading to a drop in the output of the secondary cell-type fuel cell system during power generation and a drop in the amount of electric power stored during charging.

Against the background discussed above, an object of the present invention is to provide a fuel generator that can suppress deterioration of performance, and to provide a secondary cell-type fuel cell system provided with such a fuel generator.

### Means for Solving the Problem

To achieve the above object, according to one aspect of the present invention, a fuel generator is provided with: microparticles of a fuel generating agent that generates fuel through an oxidation reaction with an oxidizing gas and that can be regenerated through a reduction reaction with a reducing gas; and a porous member. Here, the microparticles of the fuel generating agent are dispersed in the porous member.

To achieve the above object, according to another aspect of the present invention, a secondary battery-type fuel cell system is provided with: a fuel generator as described above; and a power generation/electrolysis section having a power generating function of generating electric power by using fuel supplied from the fuel generator and an electrolyzing function of electrolyzing an oxidizing gas for generating a reducing gas to be supplied to the fuel generator.

### Advantageous Effects of the Invention

With a fuel generator and a secondary cell-type fuel cell system according to the present invention, it is possible to prevent flocculation of microparticles of a fuel generating agent, and thus to prevent degradation of the performance of the fuel generator.

### Brief Description of Drawings

Fig. 1 is a diagram showing an outline of the structure of a secondary cell-type fuel cell system according to a first embodiment of the present invention;
Fig. 2 is a diagram showing changes in the volume of a fuel generating agent through an oxidation reaction and a reduction reaction.
Fig. 3 is a perspective view of a principal portion of a secondary cell-type fuel cell system according to a second embodiment of the present invention,
Fig. 4A is a side sectional view of the secondary cell-type fuel cell system according to the second embodiment of the present invention;
Fig. 4B is a diagram showing an example where a flow passage is provided for feeding water vapor from the oxidizer electrode side of the fuel cell section to the porous member;
Fig. 5 is a side sectional view of a modified example of the secondary cell-type fuel cell system according to the second embodiment of the present invention;
Fig. 6 is a horizontal sectional view, along line A-A shown in Fig. 5, of the modified example of the secondary cell-type fuel cell system according to the second embodiment of the present invention;
Fig. 7 is a diagram showing an outline of the structure of a secondary cell-type fuel cell system according to a third embodiment of the present invention;
Fig. 8 is a diagram showing an example of a method of fabricating a porous member having microparticles of a fuel generating agent arranged within spaces inside it;
Fig. 9 is a diagram showing another example of a method of fabricating a porous member having microparticles of a fuel generating agent arranged within spaces inside it; and
Fig. 10 is a side sectional view of another modified example of the secondary cell-type fuel cell system according to the second embodiment of the present invention.

### Description of Embodiments

Embodiments of the present invention will be described below with reference to the accompanying drawings. It should be understood that the embodiments presented below are in no way meant to limit the present invention.

### <First Embodiment>

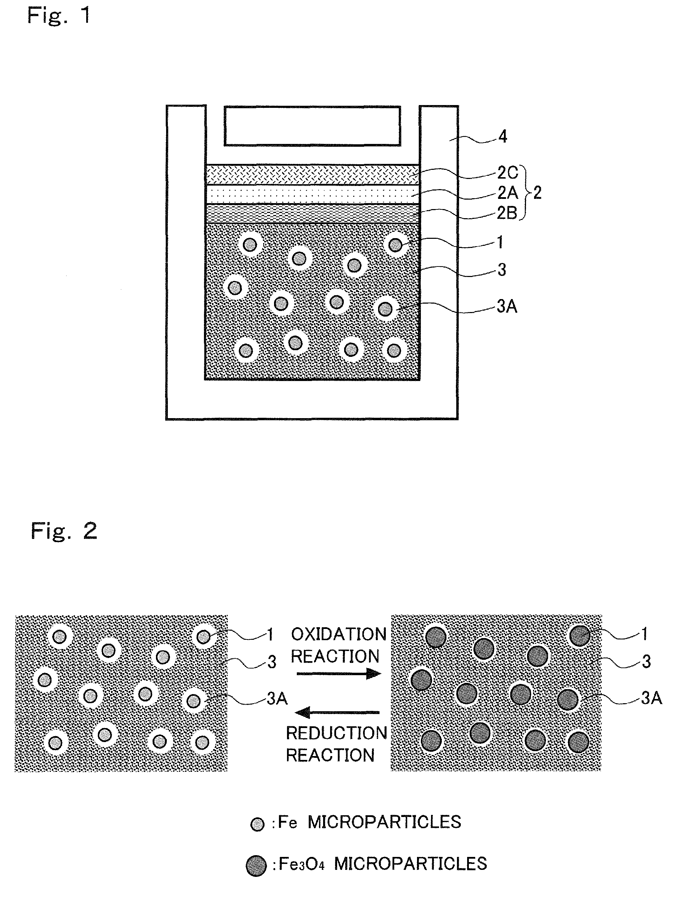

An outline of the structure of a secondary cell-type fuel cell system according to a first embodiment of the present invention is shown in Fig. 1. The secondary cell-type fuel cell system according to the first embodiment of the present invention is provided with: a fuel generating agent 1 which generates fuel through an oxidation reaction with an oxidizing gas and which can be generated through a reduction reaction with a reducing gas; a fuel cell section 2 which, during power generation of the system, generates electric power by using fuel supplied from the fuel generating agent 1 and which, during charging of the system, electrolyzes an oxidizing gas for generating the reducing gas to be supplied to the fuel generating agent 1; a porous member 3; and a container 4 which houses the fuel generating agent 1, the fuel cell section 2, and the porous member 3. Around the fuel cell section 2, around the porous member 3, or elsewhere, a heater or the like for adjusting temperature can be provided as necessary.

The fuel generating agent 1 is dispersed in the form of microparticles, which are arranged one in each of spaces 3A provided inside the porous member 3. The porous member 3 is arranged in contact with a fuel electrode 2B of the fuel cell section 2. Between the porous member 3 and the fuel electrode 2B of the fuel cell section 2, a space can be provided. The fuel generating agent 1 can be formed into microparticles, for example, through milling using a ball mill or the like. The microparticles can be given a larger surface area by developing cracks in them by a mechanical process or the like, or by roughening their surface by acid treatment, alkali treatment, or blasting.

It is preferable that the particle diameter of the microparticles, in the reduced state, of the fuel generating agent 1 be, from the viewpoint of reactivity, 50 µm or less, more preferably 5 µm or less, and still more preferably 0.5 µm or less. There is no particular restriction on the lower limit of the particle diameter in the reduced state; the particle diameter can be 0.01 µm or less. To obtain high reactivity with the oxidizing gas, it is particularly preferable that the average particle diameter of the microparticles in the reduced state be in the range of 0.05 µm to 0.5 µm.

The dispersed arrangement of the microparticles of the fuel generating agent 1 inside the porous member 3 prevents the microparticles from moving, and thus prevents mutual contact between and flocculation of the microparticles. It is preferable that the average pore diameter of the porous member 3 be smaller than the average particle diameter of the microparticles, in the reduced state, of the fuel generating agent 1. To prevent the microparticles of the fuel generating agent 1 from moving from the spaces 3A provided inside the porous member 3 to the pores in the porous member 3, it is preferable that the maximum pore diameter of the porous member 3 be smaller than the minimum particle diameter of the microparticles, in the reduced state, of the fuel generating agent 1. Making the pores in the porous member 3 smaller than the microparticles in that way prevents movement of the microparticles inside the porous member 3, and thus provides a stronger effect of preventing flocculation. To secure sufficient gas permeation, it is preferable that the average pore diameter of the porous member 3 be 0.01 µm or more.

As the fuel generating agent 1, it is possible to use a material that contains a metal as a base material, that has a metal or a metal oxide added to its surface, that generates fuel (for example, hydrogen) through an oxidation reaction with an oxidizing gas (for example, water vapor), and that can be regenerated through a reduction reaction with a reducing gas (for example, hydrogen). Examples of the metal as the base material include Ni, Fe, Pd, V, Mg, and alloys containing any of them as a base material. Fe is particularly preferred because it is inexpensive and easy to work with. Examples of the metal that can be added include Al, Rd, Pd, Cr, Ni, Cu, Co, V, and Mo. Examples of the metal oxide that can be added include SiO₂ and TiO₂. Here, however, the metal as the base material and the metal added are not identical. In this embodiment, as the fuel generating agent 1, a fuel generating agent that contains Fe as a main component is used.

As shown in Fig. 1, the fuel cell section 2 has an MEA (membrane-electrode assembly) structure in which, on opposite sides of an electrolyte film 2A, a fuel electrode 2B and an oxidizer electrode 2C are formed respectively. Although Fig. 1 shows a structure comprising a single MEA, it is also possible to provide a plurality of MEAs, or to adopt a stacked structure of a plurality of MEAs.

As the material for the electrolyte film 2A, it is possible to use, for example, a solid oxide electrolyte that uses yttria-stabilized zirconia (YSZ). It is also possible to use a solid polymer electrolyte such as Nafion (a registered trademark of DuPont), a cation-conductive polymer, or an anion-conductive polymer. The materials just mentioned are not meant as any limitation; it is possible to use any material that has the properties required in the electrolyte in a fuel cell, such as a material permeable by hydrogen ions, a material permeable by oxygen ions, or a material permeable by hydroxide ions. In this embodiment, used for the electrolyte film 2A is a solid oxide electrolyte using an electrolyte, such as yttria-stabilized zirconia (YSZ), permeable by oxygen ions or hydroxide ions, so that water (water vapor) is produced at the fuel electrode 2B during power generation of the system. In this case, through an oxidation reaction between the water vapor produced at the fuel electrode 2B during power generation of the system and the fuel generating agent 1, hydrogen can be produced from the fuel generating agent 1.

The electrolyte film 2A can be formed, in a case where it is a solid oxide electrolyte, by a chemical vapor deposition-electrochemical vapor deposition (CVD-EVD) process or the like and, in a case where it is a solid polymer electrolyte, by a coating process or the like.

The fuel electrode 2B and the oxidizer electrode 2C are each structured, for example, to be composed of a catalyst layer, which lies in contact with the electrolyte film 2A, and a diffusion electrode, which is stacked on the catalyst layer. As the catalyst layer, it is possible to use, for example, platinum black, carbon black impregnated with a platinum alloy, or the like. As the material for the diffusion electrode of the fuel electrode 2B, it is possible to use, for example, carbon paper, a Ni-Fe cermet, a Ni-YSZ cermet, or the like. As the material for the diffusion electrode of the oxidizer electrode 2C, it is possible to use, for example, carbon paper, a La-Mn-O compound, a La-Co-Ce compound, or the like.

The fuel electrode 2B and the oxidizer electrode 2C can each be formed, for example, by a vapor deposition process or the like.

During power generation of the system, the fuel cell section 2 is connected to an external load (not shown), and at the fuel electrode 2B, a reaction expressed by formula (3) below takes place.

H₂ + O²⁻ → H₂O + 2e⁻ (3)

The electrons produced through the reaction expressed by formula (3) above travel through the external load to reach the oxidizer electrode 2C, where a reaction expressed by formula (4) below takes place.

1/2O₂ + 2e⁻ → O²⁻ (4)

The oxygen ions produced through the reaction expressed by formula (4) above pass through the electrolyte film 2A to reach the fuel electrode 2B. Through repetition of the sequence of reactions described above, the fuel cell section 2 performs power generation operation. As will be understood from formula (3) above, during power generation operation, at the fuel electrode 2B, H₂ is consumed and H₂O is produced.

Based on formulae (3) and (4) above, the reaction in the fuel cell section 2 during power generation operation is expressed by formula (5) below.

H₂ + 1/2O₂ → H₂O (5)

Through the reaction expressed by formula (5) above, the H₂O gas generated at the three-phase interface that occurs at the interface between the fuel electrode 2B and the electrolyte film 2A in the fuel cell section 2 is diffused, permeates the porous member 3, and makes contact with the fuel generating agent 1 arranged in the spaces provided inside the porous member 3. In the fuel generating agent 1, through the oxidation reaction expressed by formula (1) above, the H₂O generated at the fuel electrode 2B of the fuel cell section 2 during power generation of the system can be consumed to produce H₂.

Through the oxidation reaction expressed by formula (1) above, the Fe which is the main component of the fuel generating agent 1 oxidizes into Fe₃O₄, and this causes the microparticles of the fuel generating agent 1 to have 2.1 times its original volume, increasing the factor of occupancy, by the microparticles of the fuel generating agent 1, of the spaces 3A provided inside the porous member 3 (see Fig. 2). In this way, the Fe which is the main component of the fuel generating agent 1 oxidizes into Fe₃O₄, and the volume of the microparticles of the fuel generating agent 1 increases; nevertheless, the individual microparticles of the fuel generating agent 1 remain one within each of the spaces 3A inside the porous member 3 and do not make contact with one another. Thus, the microparticles of the fuel generating agent 1 are prevented from flocculating and having a smaller surface area and hence lower reactivity. Moreover, making the pores in the porous member 3 smaller than the microparticles prevents movement of the microparticles inside the porous member 3, and this helps prevent flocculation more effectively. Thus, with a fuel generator in which microparticles of a fuel generating agent 1 is arranged in a dispersed form inside a porous member 3, it is possible to suppress degradation of performance resulting from flocculation of the microparticles through a chemical reaction.

To prevent the microparticles of the fuel generating agent 1, even in the oxidized state, from straining the porous member 3, it is preferable that the spaces 3A inside the porous member 3 be given a volume larger than the volume of the microparticles, in the oxidized state, of the fuel generating agent 1. In this way, the fuel generating agent 1 and the porous member 3 can be prevented from mechanical deterioration.

As the oxidation reaction expressed by formula (1) above progresses, more iron becomes iron oxide, and the amount of remaining iron decreases. Owing to the presence of the porous member 3, which is highly gas permeable, around the microparticles of the fuel generating agent 1, movement of the H₂O gas that reacts with the microparticles, in the reduced state, of the fuel generating agent 1 is not hampered by an increase in the volume of the microparticles of the fuel generating agent 1. By contrast, in a structure where the fuel generating agent 1 is formed in pellets such that the microparticles of the fuel generating agent 1 make contact with one another, an increase in the volume of the microparticles of the fuel generating agent 1 causes the gaps between the microparticles of the fuel generating agent 1 to diminish. Thus, movement of the H₂O gas that reacts with the microparticles, in the reduced state, of the fuel generating agent 1 may be hampered by the change in the volume of the microparticles of the fuel generating agent 1, leading to lower reactivity.

During charging of the system, the fuel cell section 2 is connected to an external electric power source (not shown). Accordingly, an electrolysis reaction expressed by formula (6) below, which is a reaction reverse to that expressed by formula (5) above, takes place, and thus, at the fuel electrode 2A, H₂O is consumed and H₂ is produced. On the other hand, in the fuel generating agent 1, a reduction reaction expressed by formula (2) above, which is a reaction reverse to the oxidation reaction expressed by formula (1) above, takes place, and thus the H₂ produced at the fuel electrode 2B of the fuel cell section 2 is consumed and H₂O is generated.

H₂O → H₂ + 1/2O₂ (6)

As during power generation of the system, also during charging of the system, the volume of the microparticles of the fuel generating agent 1 changes (the volume decreases during charging). However, since the individual microparticles of the fuel generating agent 1 remains one within each of the spaces 3A inside the porous member 3 and do not make contact with one another, the microparticles of the fuel generating agent 1 are prevented from flocculating and having a smaller surface area and hence lower reactivity. Thus, with a fuel generator in which microparticles of a fuel generating agent 1 is arranged in a dispersed form inside a porous member 3, it is possible to suppress degradation of performance resulting from flocculation of the microparticles through a reduction reaction.

As will be understood from the description above, with a fuel generator in which microparticles of a fuel generating agent 1 is arranged in a dispersed form inside a porous member 3, repeated oxidation and reduction reactions do not cause flocculation of the microparticles, and thus degradation of performance is suppressed.

### <Second Embodiment>

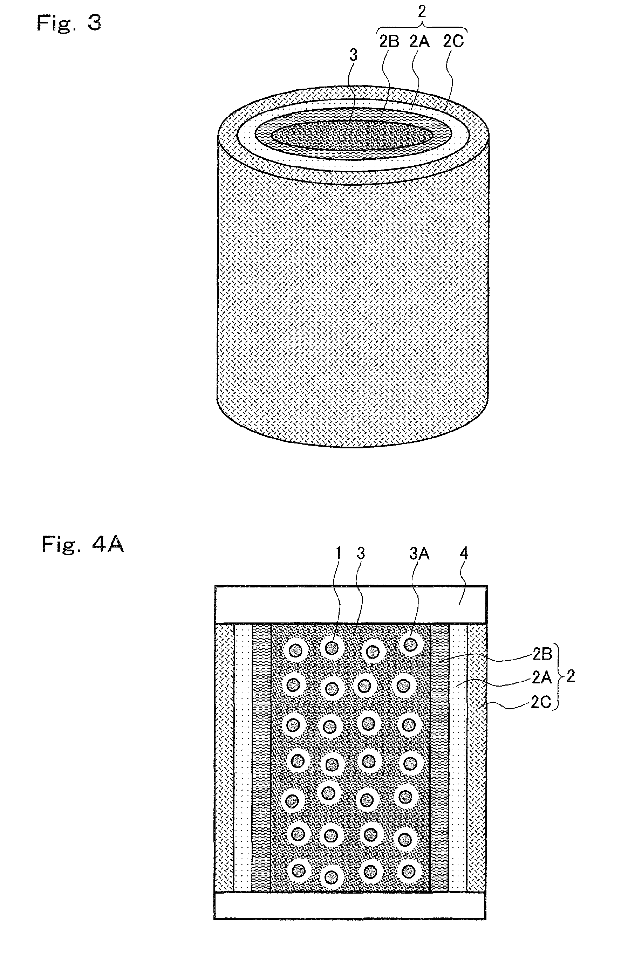

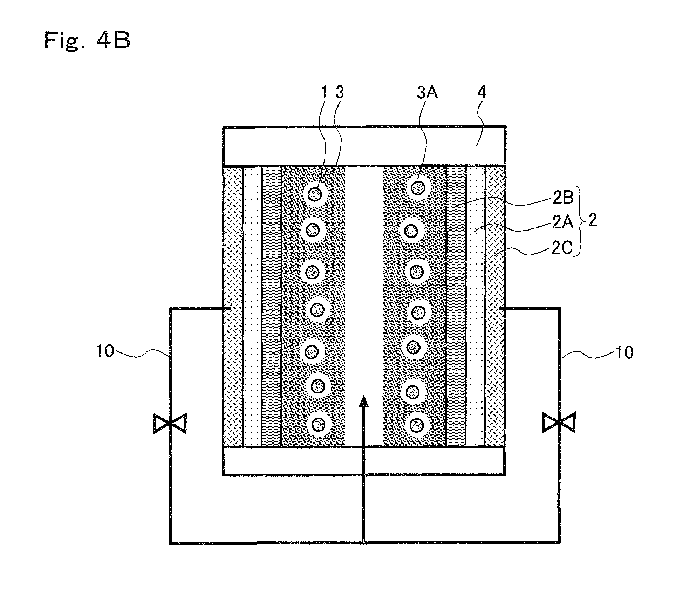

A secondary cell-type fuel cell system according to a second embodiment of the present invention will be described below with reference to Figs. 3 and 4A. In Figs. 3 and 4A, such parts which find their counterparts in Fig. 1 are identified by common reference signs, and no detailed description of them will be repeated.

Fig. 3 is a perspective view of a principal portion of a secondary cell-type fuel cell according to the second embodiment of the present invention, with a container 4 omitted from illustration. Fig. 4A is a side sectional view of the secondary cell-type fuel cell according to the second embodiment of the present invention.

In the secondary cell-type fuel cell system according to the second embodiment of the present invention, a porous member 3 in the shape of a solid cylinder (cylindrical column) is arranged at the center, and outside the porous member 3, there are arranged, in order of decreasing proximity, an electrolyte film 2A, a fuel electrode 2B, and a oxidizer electrode 2C, each in the shape of a hollow cylinder (cylindrical pipe). The porous member 3, the electrolyte film 2A, the fuel electrode 2B, and the oxidizer electrode 2C have coincident center axes.

Also in the secondary cell-type fuel cell system according to the second embodiment of the present invention, as in the secondary cell-type fuel cell system according to the first embodiment of the present invention, the individual microparticles of the fuel generating agent 1 are dispersed so as to be arranged each in one of the spaces 3A provided inside the porous member 3. This offers similar benefits as does the secondary cell-type fuel cell system according to the first embodiment of the present invention.

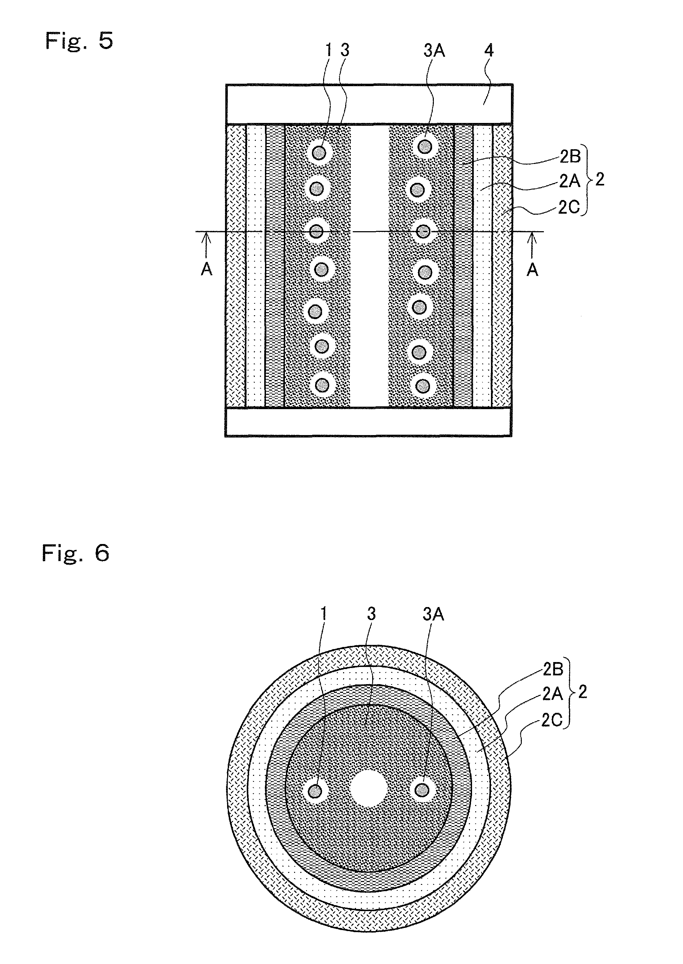

As shown in Figs. 5 and 6, the porous member 3 may be formed in the shape of a hollow cylinder like the electrolyte film 2A, the fuel electrode 2B, and the oxidizer electrode 2C. The structure with a hollow-cylindrical porous member 3 is practical, for example, in a case where the porous member 3 is so large that gas does not permeate it to reach the center and thus there is less advantage to arranging the fuel generating agent 1 at the center of the porous member 3. In such a case, the space at the center can be used effectively. For example, in a structure, like that of the fuel cell disclosed in Japanese Patent Application Publication No. 2009-99491, where a solid polymer electrolyte permeable by hydrogen ions is used as the electrolyte film 2A of the fuel cell section 2 and, during power generation, water vapor is produced at the oxidizer electrode 2C of the fuel cell section 2, it is possible to provide a passage 10 for feeding the water vapor to the porous member 3 and use the hollow portion of the porous member 3 as part of the passage.

### <Third Embodiment>

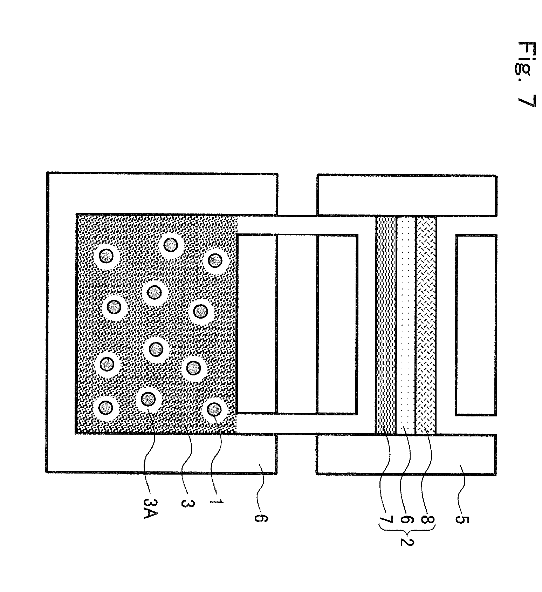

An outline of the structure of a secondary cell-type fuel cell system according to a third embodiment of the present invention is shown in Fig. 7. In Fig. 7, such parts which find their counterparts in Fig. 1 are identified by common reference signs, and no detailed description of them will be repeated.

The secondary cell-type fuel cell system shown in Fig. 7 according to the third embodiment of the present invention is identical with the secondary cell-type fuel cell system shown in Fig. 1 according to the first embodiment of the present invention except in the following respects: instead of the container 4, two containers 5 and 6 are provided, with a fuel cell section 2 arranged inside the container 5 and with a fuel generating agent 1 and the porous member 3 arranged inside the container 6; piping is additionally provided to secure communication between the sealed space enclosed by the inner wall of the container 5 and the electrolyte film 2A and the sealed space enclosed by the inner wall of the container 6. The sealed space enclosed by the inner wall of the container 5 and the electrolyte film 2A, the sealed space enclosed by the inner wall of the container 6, and the piping that permits the two sealed spaces to communicate with each other, together constitute a gas circulation passage, in which a circulator such as a blower or a pump can be provided as necessary.

Also in the secondary cell-type fuel cell system according to the third embodiment of the present invention, as in the secondary cell-type fuel cell system according to the first embodiment of the present invention, the individual microparticles of the fuel generating agent 1 are dispersed so as to be arranged each in one of the spaces 3A provided inside the porous member 3. This offers similar benefits as does the secondary cell-type fuel cell system according to the first embodiment of the present invention.

In addition, owing to the structure where the fuel cell section 2 on one hand and the fuel generating agent 1 and the porous member 3 on the other hand are arranged in separate containers, which are made to communicate with each other through piping, it is possible, by varying the length and shape of the piping, to easily arrange the two containers in a way that suits the space and position where they are to be arranged. For example, in a case where a secondary cell-type fuel cell system according to the present invention is employed as a driving power source for an automobile, for it to be arranged within a limited space inside the automobile, a structure like that of this embodiment allows more flexible arrangement than one where a fuel cell and a fuel generator are integrated together. Moreover, with the structure where the fuel cell section 2 on one hand and the fuel generating agent 1 and the porous member 3 on the other hand are arranged in separate containers, when deterioration necessitates replacement on one side, replacement can be done on that side alone.

### <Modified Examples>

In the embodiments described above, a solid oxide electrolyte is used as the electrolyte film 2A of the fuel cell 2 so that, during power generation, water (water vapor) is produced at the fuel electrode 7. With this configuration, water vapor is produced at the porous member 3, where the fuel generating agent 1 is arranged in the spaces 3A, and this is advantageous to simplifying the design of, and reducing the size of, the device. On the other hand, as previously discussed in connection with a modified example of the second embodiment, it is also possible, as in the fuel cell disclosed in Japanese Patent Application Publication No. 2009-99491, to use as the electrolyte film 2A of the fuel cell section 2 a solid polymer electrolyte permeable by hydrogen ions. In that case, during power generation, water vapor is produced at the oxidizer electrode 2C of the fuel cell section 2, and this can be coped with by providing a flow passage for feeding the water vapor to the porous member 3, where the fuel generating agent 1 is arranged in the spaces 3A.

In the embodiments described above, a single fuel cell section 2 performs both power generation and electrolysis of water. Instead, a configuration can be adopted where a fuel cell (for example, a solid oxide fuel cell dedicated to power generation) and a water electrolyzer (for example, a solid oxide fuel cell dedicated to electrolysis of water) are connected in parallel in a gas passage with respect to the porous member 3.

In the embodiments described above, hydrogen is used as the fuel for the fuel cell section 2. Instead, any reducing gas other than hydrogen, such as carbon monoxide or a hydrocarbon, can be used as the fuel for the fuel cell section 2.

### <Method of Fabricating a Porous Member>

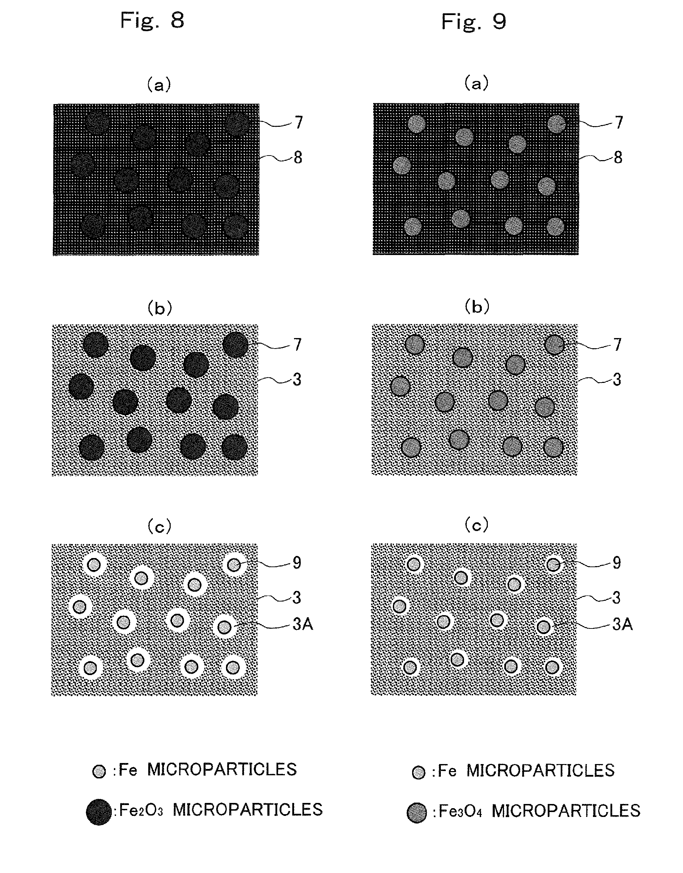

An example of a method of fabricating the porous member 3 having microparticles of the fuel generating agent 1 arranged in spaces 3A inside it will now be described with reference to Fig. 8.

First, microparticles of iron oxide, microparticles of a ceramic material as the material for the porous member 3, and a sacrificial material for forming pores in the porous member 3 are mixed together to obtain a mixture. Examples of the material for the porous member 3 include aluminum oxide, silica, silica-alumina, mullite, cordierite, zirconia, stabilized zirconia, yttria-stabilized zirconia (YSZ), partially stabilized zirconia, alumina, magnesia, lanthanum calcium, lanthanum chromite, lanthanum strontium, and porous glass. It is preferable to use a material having an expansion/contraction coefficient close to those of other components such as the fuel electrode, because that prevents destruction of the device due to a difference in expansion/contraction coefficients.

Next, the mixture is mixed with a solvent or the like to adjust viscosity so as to suit the method and equipment by and on which the porous member 3 is formed. For example, in a case where the porous member 3 is formed into a sheet, the mixture is adjusted by being mixed with ethanol or toluene as a solvent so as to be printable by blade coating or the like; it can then be formed into a sheet by printing. In a case where the porous member 3 is formed into the shape of a hollow or solid cylinder on an extrusion machine, the mixture is adjusted to be clayish.

The adjusted mixture can then be, by printing or on an extrusion machine, formed into a sheet, a hollow cylinder, a solid cylinder, or the like. As shown in Fig. 8(a), the formed mixture contains iron oxide microparticles 7, ceramic microparticles, a sacrificial material, and a solvent 8 or the like.

Next, the mixture formed into a sheet, a hollow cylinder, a solid cylinder, or the like is dried, and is then baked. This causes the solvent and sacrificial material components to evaporate, and leaves a porous member 3 containing iron oxide microparticles 7 as shown in Fig. 8(b).

Finally, the porous member 3 containing the iron oxide microparticles 7 is subjected to reduction treatment. There is no particular restriction on how the reduction treatment is done. In one example of the reduction treatment, the porous member 3 containing the iron oxide microparticles 7 is placed in an hydrogen atmosphere and is heated. The reduction treatment causes the iron oxide microparticles 7 to be reduced to become iron microparticles 9, and leaves a porous member 3 having iron microparticles 9 (an example of the microparticles of the fuel generating agent 1) arranged within spaces 3A inside it as shown in Fig. 8(c).

In Fig. 8, microparticles of Fe₂O₃ are used as iron oxide microparticles. Instead, as shown in Fig. 9, the fabrication method described above may be practiced by use of microparticles of Fe₃O₄ as iron oxide microparticles so as to fabricate a porous member 3 having iron microparticles 9 (an example of microparticles of the fuel generating agent 1) arranged within spaces 3A as shown in Fig. 9(c).

Here, with Fe₂O₃ microparticles, oxidation has progressed further than with Fe₃O₄ microparticles, resulting in oxygen molecules occupying a higher proportion in the entire volume. Accordingly, when a hydrogen generating member is fabricated by use of Fe₂O₃ microparticles as in Fig. 8, the volume of the spaces 3A in the porous member 3 produced through reduction of the Fe₂O₃ microparticles is larger than the volume of the microparticles, in the oxidized state, of the fuel generating agent 1 (the Fe₃O₄ microparticles produced through the oxidation reaction expressed by formula (1) above). By contrast, when a hydrogen generating member is fabricated by use of Fe₃O₄ microparticles, the volume of the spaces 3A in the porous member 3 produced through reduction of the Fe₃O₄ microparticles is approximately equal to the volume of the microparticles, in the oxidized state, of the fuel generating agent 1 (the Fe₃O₄ microparticles).

Naturally occurring iron oxides are in large part in a state where oxidation has progressed to make them Fe₂O₃, and thus Fe₂O₃ has the advantage of being easier to obtain. Moreover, since the volume of the spaces 3A is larger than the volume of the microparticles, in the oxidized state, of the fuel generating agent 1, the gas that has permeated the porous member 3 is more likely to spread evenly around the microparticles, and this helps promote the reaction. Moreover, even when the microparticles are oxidized and come to have a larger volume, it is less likely that the microparticles strain and damage the porous member.

### <First Exemplary Method of Fabricating a Fuel Cell System According to the Present Invention>

An example of a method of fabricating a fuel cell system structured as shown in Figs. 5 and 6 will now be described. As the material for the porous member 3, yttria-stabilized zirconia (YSZ) was used. YSZ microparticles with a particle diameter of several hundred nanometers, Fe₂O₃ microparticles with a particle diameter of about 0.5 µm, a polyvinyl butyral compound as a binder, acrylic powder or carbon powder or the like as a pore-forming material, and water were mixed to obtain a clayish mixture. On an extrusion machine, the mixture was formed into the shape of a hollow cylinder with an outer diameter of 3 mm and an inner diameter of 2.4 mm.

Next, the formed mixture was dried for 10 hours at 50° C, and then, on the hollow-cylindrical mixture, a fuel electrode layer and an electrolyte firm layer were formed. Equal amounts of nickel oxide and yttria-stabilized zirconia (YSZ) as powder ceramic materials were mixed to prepare an electrically conductive powder, which was then mixed with a polyvinyl butyral compound as a binder and appropriate amounts of ethanol and toluene as solvents to obtain a slurry for the fuel electrode. The slurry for the fuel electrode was, by dip coating, coated on the hollow-cylindrical mixture to form the fuel electrode layer.

Next, in a similar manner, a slurry for the electrolyte film was prepared, and was coated, by dip coating, to form the electrolyte film. The product was then baked to obtain a hollow-cylindrical member having a fuel electrode 2B and an electrolyte film 2A, each hollow-cylindrical, formed outside a hollow-cylindrical porous member 3 containing iron oxide microparticles.

Next, lanthanum manganite in powder form was mixed with a polyvinyl butyral compound as a binder and appropriate amounts of ethanol and toluene as solvents to obtain a slurry for the oxidizer electrode. The slurry for the oxidizer electrode was coated, by dip coating, on the hollow-cylindrical member to form the oxidizer electrode layer. Finally, the product was baked in a hydrogen atmosphere, and was housed inside a container 4 to obtain a fuel cell system structured as shown in Figs. 5 and 6.

### <Second Exemplary Method of Fabricating a Fuel Cell System According to the Present Invention>

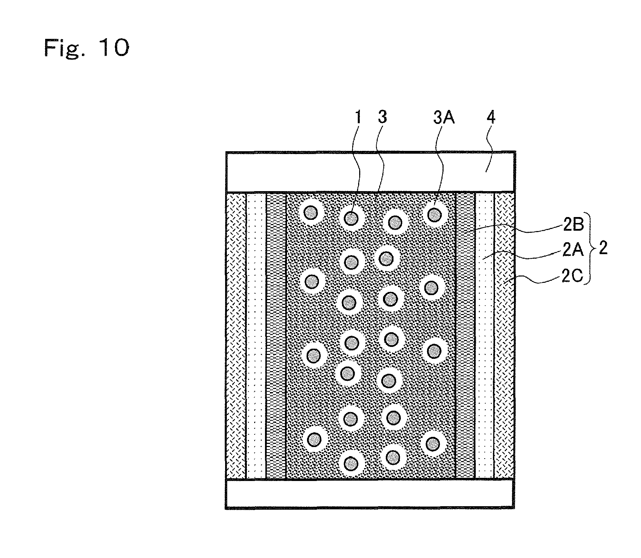

An example of a method of fabricating a fuel cell system structured as shown in Fig. 10 will now be described. A fuel cell system structured as shown in Fig. 10 is identical with a fuel cell system structured as shown in Figs. 5 and 6 except in the following respects: the porous member 3 has the shape of a solid cylinder; and the microparticles of the fuel generating agent 1 are distributed with varying density inside the porous member 3 so as to be sparser in a portion of the porous member 3 closer to the fuel electrode 2B and denser in a portion of the porous member 3 farther away from the fuel electrode 2B (closer to the center axis of the porous member).

The microparticles, in an oxidized state, of the fuel generating agent 1, due to their increased volume, may hamper passage of gas. Thus, if more microparticles of the fuel generating agent 1 are arranged in a portion of the porous member 3 closer to the fuel electrode 2B, when the microparticles of the fuel generating agent 1 arranged in the portion of the porous member 3 closer to the fuel electrode 2B are oxidized, these may prevent gas from reaching the microparticles of the fuel generating agent 1 arranged in a portion of the porous member 3 farther away from the fuel electrode 2B. Arranging the microparticles of the fuel generating agent 1 such as to be sparser in a portion of the porous member 3 closer to the fuel electrode 2B and denser in a portion of the porous member 3 farther away from the fuel electrode 2B as in the structure shown in Fig. 10 makes it easier for gas to be supplied to the microparticles of the fuel generating agent 1 arranged in the portion of the porous member 3 farther away from the fuel electrode 2B. This makes it easier to evenly use the microparticles of the fuel generating agent 1 arranged inside the porous member 3.

As the material for the porous member 3, yttria-stabilized zirconia (YSZ) was used. YSZ microparticles with a particle diameter of several hundred nanometers, Fe₂O₃ microparticles with a particle diameter of about 0.5 µm, a polyvinyl butyral compound as a binder, acrylic powder or carbon powder or the like as a pore-forming material, and water were mixed to obtain a clayish mixture. On an extrusion machine, the mixture was formed into the shape of a solid cylinder with an outer diameter of 3 mm.

Next, the formed mixture was dried for 10 hours at 50° C, and then, on the solid-cylindrical mixture, a porous member layer mixed with a low proportion of Fe₂O₃ microparticles, a fuel electrode layer 2B, and an electrolyte firm layer 2A were formed. YSZ microparticles with a particle diameter of several hundred nanometers, Fe₂O₃ microparticles with a particle diameter of about 0.5 µm, a polyvinyl butyral compound as a binder, and appropriate amounts of ethanol and toluene as solvents were mixed to obtain a slurry for the porous member mixed with a lower proportion of Fe₂O₃ microparticles than the mixture described previously. The slurry for the porous member was, by dip coating, coated on the solid-cylindrical mixture to produce the porous member layer mixed with a low proportion of Fe₂O₃ microparticles. From here on, the fabrication method follows the same processes as in the first exemplary fabrication method, and therefore no overlapping description will be repeated.

### List of Reference Signs

- 1: fuel generating agent
- 2: fuel cell section
- 2A: electrolyte film
- 2B: fuel electrode
- 2C: oxidizer electrode
- 3: porous member
- 3 A: spaces
- 4-6: container
- 7: iron oxide microparticles
- 8: ceramic microparticles, sacrificial material, solvent, etc.
- 9: iron microparticles
- 10: flow passage

## Claims

1. A fuel generator comprising:
microparticles of a fuel generating agent that generates fuel through an oxidation reaction with an oxidizing gas and that can be regenerated through a reduction reaction with a reducing gas; and
a porous member,
wherein the microparticles of the fuel generating agent are dispersed in the porous member.

2. The fuel generator according to claim 1,
wherein the microparticles of the fuel generating agent are respectively arranged in spaces provided inside the porous member.

3. The fuel generator according to claim 1 or 2,
wherein a volume of the spaces inside the porous member is equal to or larger than a volume of the microparticles, in an oxidized state, of the fuel generating agent.

4. The fuel generator according to any one of claims 1 to 3,
wherein an average particle diameter of the microparticles, in a reduced state, of the fuel generating agent is in a range of 0.05 µm to 0.5 µm.

5. The fuel generator according to any one of claims 1 to 4,
wherein an average pore diameter of the fuel generating agent equals 0.01 µm or more, and a maximum pore diameter of the porous member is smaller than a minimum particle diameter of the microparticles, in a reduced state, of the fuel generating agent.

6. The fuel generator according to any one of claims 1 to 5,
wherein the microparticles of the fuel generating agent are distributed with varying density inside the porous member so as to be sparser in a portion of the porous member closer to a fuel supply destination side and denser in a portion of the porous member farther away from the fuel supply destination side.

7. The fuel generator according to any one of claims 1 to 6,
wherein a main component of the fuel generating agent is iron.

8. A secondary battery-type fuel cell system comprising:
the fuel generator according to any one of claims 1 to 7; and
a power generation/electrolysis section having
a power generating function of generating electric power by using fuel supplied from the fuel generator and
an electrolyzing function of electrolyzing an oxidizing gas for generating a reducing gas to be supplied to the fuel generator.

9. The secondary battery-type fuel cell system according to claim 8,
wherein the porous member is solid-cylindrical in shape, and the power generation/electrolysis section is hollow-cylindrical in shape and is arranged outside the porous member.

10. The secondary battery-type fuel cell system according to claim 8,
wherein the porous member is hollow-cylindrical in shape, and the power generation/electrolysis section is hollow-cylindrical in shape and is arranged outside the porous member.

11. The secondary battery-type fuel cell system according to claim 10,
wherein
the power generation/electrolysis section has
a fuel electrode,
an oxidizer electrode, and
an electrolyte held between the fuel electrode and the oxidizer electrode,
the electrolyte is a solid polymer electrolyte permeable to hydrogen ions, the electrolyte generating water vapor at the oxidizer electrode during power generation, and
the generated water vapor is circulated in a hollow portion of the hollow-cylindrical porous member so as to be reacted with the microparticles of the fuel generating agent arranged inside the porous member.

12. A method of manufacturing the fuel generator according to claim 3, comprising:
a step of mixing
microparticles, in an oxidized state, of a fuel generating agent that generates fuel through an oxidation reaction with an oxidizing gas and that can be regenerated through a reduction reaction with a reducing gas,
a material for a porous member, and
a sacrificial material for forming pores in the porous member
to obtain a mixture;
a step of baking or drying the mixture to eliminate the sacrificial material, and
a step of reducing the microparticles, in the oxidized state, of the fuel generating agent into a reduced state.

13. The method according to claim 12,
wherein the microparticles, in the oxidized state, of the fuel generating agent are microparticles of Fe₂O₃ or Fe₃O₄.
